# EUROPÄISCHE PATENTSCHRIFT

(11) **EP 1 105 801 B1**
(45) Veröffentlichungstag und Bekanntmachung des Hinweises auf die Patenterteilung: **13.11.2002**
(21) Anmeldenummer: 99952324.4
(22) Anmeldetag: 06.08.1999
(51) Int. Cl.: G06F 11/14

(54) **SYSTEM, VERFAHREN UND STEUERUNGSVORRICHTUNG ZUR ERZEUGUNG EINER MELDUNG ALS E-MAIL ÜBER INTERNET UND/ODER INTRANET**
SYSTEM, METHOD AND CONTROL DEVICE FOR GENERATING A MESSAGE IN THE FORM OF AN E-MAIL ON THE INTERNET AND/OR INTRANET
SYSTEME, PROCEDE ET DISPOSITIF DE COMMANDE PERMETTANT DE PRODUIRE UN MESSAGE SOUS FORME DE COURRIER ELECTRONIQUE TRANSMIS VIA INTERNET ET/OU INTRANET

(30) Priorität: 19.08.1998 DE 19837650
(43) Veröffentlichungstag der Anmeldung: 13.06.2001
(73) Patentinhaber: SIEMENS AKTIENGESELLSCHAFT, 80333 München (DE)
(72) Erfinder: BLUMENSTOCK, Werner, D-91085 Weisendorf (DE)
(86) Internationale Anmeldenummer: DE9902467
(87) Internationale Veröffentlichungsnummer: WO00011552

(56) Entgegenhaltungen:
- US-A- 5 748 884

## Beschreibung

Die Erfindung betrifft ein System zur Erzeugung einer Meldung einer Steuerungsvorrichtung, eine Steuerungsvorrichtung sowie ein Verfahren zur Erzeugung einer Meldung gemäß dem Oberbegriff der Ansprüche 1, 3 und 5.

Derartige Meldungen werden im Bereich der Automatisierungstechnik üblicherweise bei Bedien- und Beobachtungssystemen angezeigt. Derartige Bedien- und Beobachtungssysteme sind dabei über ein lokales Netz oder über Stand- oder Wählleitung mit einer Steuerungsvorrichtung gekoppelt.

Aus US-A-5 748 884 ist ein System zur automatischen Generierung von Meldungen im Falle fehlerhaft laufender Programme bekannt. Derartige Meldungen können beispielsweise als elektronische Mail abgesetzt werden.

Der Erfindung liegt die Aufgabe zugrunde, ein System, eine Steuerungsvorrichtung und ein Verfahren zur Erzeugung einer Meldung anzugeben, welche(s) auf einfache Weise eine Erzeugung von Meldungen im Bereich der Automatisierungstechnik sowohl an Empfänger vor Ort als auch an weit entfernte Empfänger ermöglicht.

Diese Aufgabe wird durch ein System zur Erzeugung einer Meldung einer Steuerungsvorrichtung, durch eine Steuerungsvorrichtung sowie durch ein Verfahren zur Erzeugung einer Meldung mit den im kennchnenden Teil der Ansprüche 1, 3 und 5 angegebenen Merkmalen gelöst.

Der Erfindung liegt die Erkenntnis zugrunde, im Bereich der Informationstechnik bekannte Techniken zum Senden und zum Empfangen von Meldungen auch im Bereich der Automatisierungstechnik einzusetzen. Hierzu weist die Steuerungsvorrichtung, beispielsweise eine speicherprogrammierbare Steuerung, eine numerische Steuerung oder eine Robotersteuerung entsprechende Mittel auf, die die Erzeugung einer sogenannten E-Mail ermöglichen. In der Steuerungsvorrichtung ist dabei in der Regel ein oder mehrere gewünschte Adressaten vorgegeben, die im Störungsfall die entsprechende Fehler bzw. Alarmmeldung erhalten sollen. Die Übertragung der Meldung erfolgt über die Infrastruktur eines Intranets, d.h. eines hausinternen Datennetzes oder bei weiterentfernteren Empfängern über das Internet, über das eine weltweite Ankopplung an jeden mit dem Internet verbundenen Rechner möglich ist. Für die Erzeugung und Übertragung der Meldungen können somit standardmäßig ohnehin vorhandene Programme und Übertragungsstrukturen verwendet werden, ohne daß ein zusätzlicher Aufwand entsteht. Der Anwender, beispielsweise der Bediener oder das Überwachungspersonal kann die Alarme und Meldungen mit den ohnehin verfügbaren Standard-Mail-Tools einsehen. Eine spezielle Ausbildung zum Umgang mit derartigen Werkzeugen ist somit nicht erforderlich.

Eine eindeutige Zuordnung der Meldung zur jeweils meldenden Steuerungsvorrichtung sowie zum Inhalt der Meldung kann auf einfache Weise dadurch erfolgen, daß die Meldung ein Kennungsfeld für eine der jeweiligen Meldung individuell zugeordnete Meldungskennung aufweist, daß die Steuerungsvorrichtung Mittel zum Empfang einer von der Empfangsvorrichtung an die Steuerungsvorrichtung zurückgesendeten Bestätigungsmeldung, die als Bestätigungskennung die der zugrunde liegenden Meldung zugehörige Kennung enthält, und Mittel zum Vergleich der in der Bestätigungsmeldung enthaltenen Kennung mit der in der gesendeten Meldung enthaltenen Kennung aufweist.

Eine intelligente Verwaltung und übersichtliche Dokumentation der Meldungen innerhalb der Steuerungsvorrichtung selbst, kann dadurch sichergestellt werden, daß die Steuerungsvorrichtung Mittel zur Markierung einer Meldung als quittiert aufweist, wenn von der Steuerungsvorrichtung eine Bestätigungsmeldung mit der der zugehörigen Meldung zugeordneten Meldungskennung empfangen wurde.

Besonders geeignete Anwendungsfälle, die in der Regel bereits bestehende Übertragungsinfrastruktur ohne großen zusätzlichen Aufwand nutzen kann, besteht darin, daß die Steuerungsvorrichtung eine speicherprogrammierbare Steuerung, eine numerische Steuerung und/oder eine Robotersteuerung ist.

Bei einer Steuerungsvorrichtung, die automatisch Meldungen generieren kann, weist die Steuerungsvorrichtung Mittel zum Empfang einer von der Empfangsvorrichtung an die Steuerungsvorrichtung zurückgesendeten Bestätigungsmeldung, die als Bestätigungskennung die der zugrunde liegenden Meldung zugehörige Kennung enthält, und Mittel zum Vergleich der in der Bestätigungsmeldung enthaltenen Kennung mit der in der gesendeten Meldung enthaltenen Kennung aufweist, wobei die Meldung und die Bestätigungsmeldung ein Kennungsfeld für eine der jeweiligen Meldung individuell zugeordnete Meldungskennung bzw. Bestätigungskennung aufweisen.

Eine eindeutige Zuordnung von Meldung und Steuerungsvorrichtung bzw. eine eindeutige Identifikation der Meldung wird dadurch erzielt, daß die Steuerungsvorrichtung in ein Kennungsfeld der Meldung eine der jeweiligen Meldung individuell zugeordnete Meldungskennung einträgt, daß von der Empfangsvorrichtung nach Empfang einer Meldung an die Steuerungsvorrichtung eine Bestätigungsmeldung zurückgesendet wird, die die als Bestätigungskennung die der zugrunde liegenden Meldung zugehörige Kennung enthält, und daß in der Steuerungsvorrichtung die in der Bestätigungsmeldung enthaltene Bestätigungskennung mit der in der gesendeten Meldung enthaltenen Meldekennung verglichen wird.

Eine automatische Dokumentation in Bezug auf erfolgte Meldungen und in Bezug auf den Empfang der Meldungen bei den jeweiligen Adressaten wird dadurch ermöglicht, daß in der Steuerungsvorrichtung eine Quittierung einer Meldung erfolgt, wenn von der Steuerungsvorrichtung eine Bestätigungsmeldung mit der der zugehörigen Meldung zugeordneten Meldungskennung empfangen wurde.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur Erzeugung einer Alarmmeldung,
- FIG 2a: ein Ausführungsbeispiel für den prinzipiellen Aufbau einer Sicht einer Alarmmeldung,
- FIG 2b: ein Ausführungsbeispiel für den prinzipiellen Aufbau einer Sicht einer Bestätigungsmeldung und
- FIG 3: eine schematische Darstellung für den Prozeßablauf zur Erzeugung und Quittierung einer Meldung.

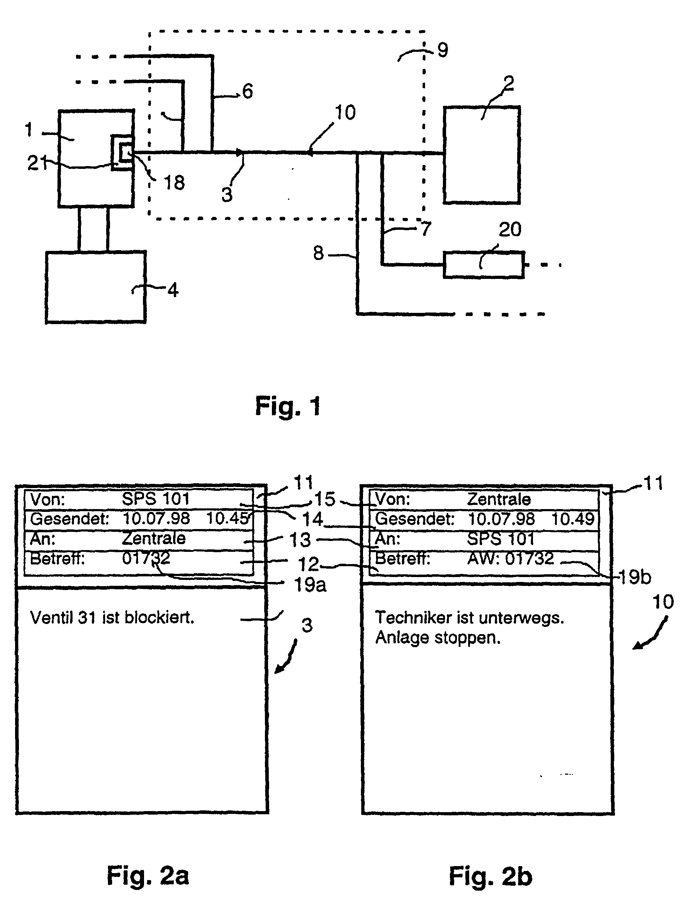

Figur 1 zeigt ein Ausführungsbeispiel eines Systems zur Erzeugung einer Alarmmeldung. Das System besteht aus einer Steuerungsvorrichtung 1, die mit einem Automatisierungssystem 4 gekoppelt ist. Bei der Steuerungsvorrichtung 1 handelt es sich beispielsweise um eine speicherprogrammierbare Steuerung, um eine numerische Steuerung oder eine Robotersteuerung. Die Steuerungsvorrichtung 1 weist eine Sendevorrichtung 21 zur Erzeugung einer Meldung 3 als sogenannte E-Mail auf. Die Meldung 3 wird über ein Übertragungssystem 9 zu einem Empfänger 2 übertragen. Das Übertragungssystem 9 weist Verzweigungen 5,6,7,8 auf. Diese Verzweigungen 5,6,7,8 sind beispielsweise mit weiteren Steuerungsvorrichtungen, Bedien- und Beobachtungssystemen etc. verbunden. Über die Verbindungsleitung 7 ist das Datenübertragungssystem 9 beispielsweise unter Zwischenschaltung einer als Server dienenden Datenverarbeitungsvorrichtung mit dem sogenannten World Wide Web (= Internet) koppelbar. Der Empfänger 2 weist Mittel auf, die die Quittierung der Meldung 3 als Bestätigungsmeldung 10 ermöglichen.

Die Besonderheit des in Figur 1 dargestellten Systems besteht darin, daß die Steuerungsvorrichtung 1 die Sendevorrichtung 21 enthält, die auf die innerhalb eines Firmengeländes in der Regel ohnehin vorhandene Infrastruktur in Form des Datenübertragungsystems 9 zugreift. Die Sende- und/oder Empfangsvorrichtung 21, weist beispielsweise ein Standard-Mail-Tool wie Microsoft Exchange etc. auf. Im Fehlerfall bzw. bei einer gewünschten Alarmmeldung 3 wird in der Steuerungsvorrichtung dieses Mail-Werkzeugs aktiviert. Als Empfänger der Meldung 3 wird beispielsweise die Empfangsvorrichtung 2 vorgegeben. Darüber hinaus kann jede beliebige mit dem Datenübertragungssystem 9, d.h. mit dem Internet-Verbindungen 5,6,8 bzw. mit der Internet-Verbindung 7 koppelbare Empfängeradresse zusätzlich angegeben werden. Im sogenannten Betreff-Feld der Meldung 3 wird beispielsweise eine eindeutige Kennung oder ein Stichwort wie beispielsweise "Alarm" eingetragen, welche die Meldung 3 individuell charakterisiert und identifiziert. Im sogenannten Text-Teil der Meldung 3 wird der entsprechende Alarm- oder Meldetext eingetragen. Nach Fertigstellung der Meldung 3 wird diese an den Empfänger 2 und gegebenenfalls an weitere Empfänger versandt. Der Empfänger 2 kann über die sogenannte Anwort-Funktion des verwendeten E-Mail-Werkzeugs per Hand oder automatisch eine Antwort-Mail an die Steuerungsvorrichtung 1 zurücksenden. Vorteilhafterweise wird dabei die im Betreff-Feld der Meldung 3 enthaltene Kennung in das Betreff-Feld der zurückgesendeten Anwortmeldung 10 übertragen. Diese Anwortmeldung 10 bzw. Bestätigungsmeldung 10 wird an die Steuerungsvorrichtung 1 gesendet und von der Sende-Empfangsvorrichtung 21 empfangen. Mit Hilfe der im Betreff-Feld der Bestätigungsmeldung 10 enthaltenen Kennung kann die Antwortmeldung 10 automatisch den zugehörigen Alarm bzw. der zugehörigen Meldung 3 zugeordnet werden. Innerhalb der Steuerungsvorrichtung 1 kann daraufhin der Status der Meldung 3 auf "quittiert" hin geändert werden. Das in Figur 1 dargestellte Alarm- und Meldesystem ermöglicht eine einfache und sichere Übertragung von Alarmmeldungen etc. durch die Verwendung der in der Regel ohnehin vorhandenen Infrastruktur wie Internet/ Intranet wird der Aufbau einer eigenständigen Kommunikationsinfrastruktur für die Übermittlung von Alarmen bzw. Meldungen vermieden. Dies führt zu einer erheblichen Kosteneinsparung.

Figur 2a zeigt ein Ausführungsbeispiel für den prinzipiellen Aufbau einer Alarmmeldung 3, wie sie als Sicht beispielsweise auf einen Bildschirm der mit der Steuerungsvorrichtung und/oder der Empfangsvorrichtung 2 (vergleiche Figur 1) darstellbar ist. Die Meldung 3 weist ein Identifikationsfeld 11 sowie ein Textfeld 16 auf. Das Identifikationsfeld 11 enthält ein Adreßfeld 13, ein Absenderfeld 15, ein Betrefffeld 12 sowie ein Zeitfeld 14 zur Angabe des Sendezeitpunkts, der in der Regel vom Mail-Server selbsttätig vergeben wird. Das Adreßfeld 13 dient der Angabe des Empfängers. Das Absenderfeld 15 dient der Angabe des Absenders, d.h. der Steuerungsvorrichtung, die die Meldung 3 abgibt. Das Sendezeitfeld 14 dient der Angabe des Sendezeitpunkts der Meldung 3, während im Betrefffeld 12 eine Kennung 19a eingetragen ist, die dem jeweiligen Alarm eindeutig zugeordnet ist. Im Textfeld 16 ist der Meldetext enthalten.

Der Aufbau der in Figur 2a dargestellten Meldung 3 entspricht dabei dem aus bekannten E-Mail-Werkzeugen wie Microsoft Exchange bekannten Aufbau. Dieser bekannte Aufbau wird für die speziellen Aufgaben zur Abgabe einer Fehler- bzw. einer Alarmmeldung dahingehend angepaßt, daß die E-Mail automatisch generiert wird und die einzelnen Einträge von Adreßfeld 13, Absenderfeld 15 und Betrefffeld 12 automatisch mit der Erzeugung einer Meldung 3 generiert wird.

Figur 2b zeigt den prinzipiellen Aufbau einer Bestätigungsmeldung 10. Der grundsätzliche Aufbau der Bestätigungsmeldung 10 entspricht dabei dem Aufbau der Meldung 3 (vergleiche Figur 2a). So weist die Bestätigungsmeldung 10 wiederum ein Identifikationsfeld 11 sowie ein Textfeld 17 auf. Im Adreßfeld 13 der Bestätigungsmeldung 10 ist der in der Meldung 3 enthaltene Adressat "SPS 101" angegeben, während im Absenderfeld 15 die Absenderkennung, in diesem Fall der Absender "Zentrale" enthalten ist. Das Betrefffeld 12 enthält eine Bestätigungskennung 19b, wobei die Bestätigungskennung 19b der Meldekennung 19a der Meldung 3 entspricht und von dieser übernommen wurde. Das Textfeld 17 enthält bei dem in Figur 2b gezeigten Ausführungsbeispiel einen Antworttext. In dem Antworttext können auch Steuerungsbefehle in Form von Programmiersprache enthalten sein, die zur Steuerung der Steuerungsvorrichtung 1 vorgesehen sind.

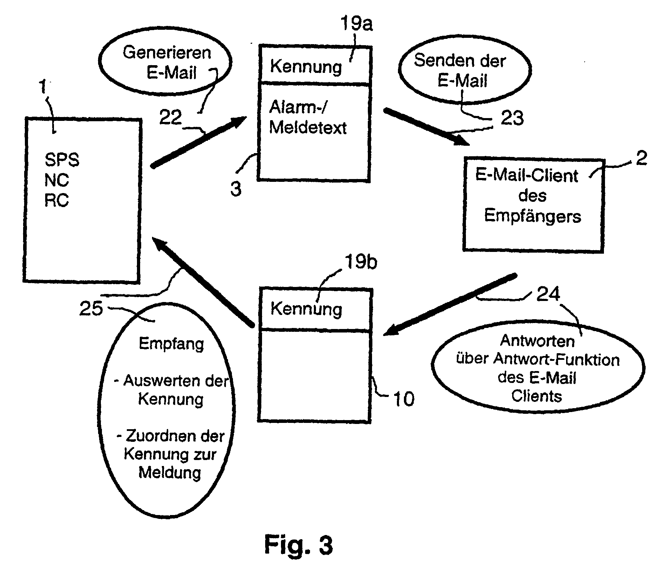

Figur 3 zeigt eine schematische Darstellung für den Prozeßablauf zur Erzeugung und zur Quittierung einer Meldung 3. Eine Steuerungsvorrichtung 1 erzeugt in einem Prozeßschritt 22 eine E-Mail 3, die beispielsweise entsprechend der in Figur 2a gezeigten Struktur ausgebildet ist. In einem zweiten Prozeßschritt 23 wird die generierte E-Mail 3 über Intranet und/oder Internet an einen Empfänger 2, d.h. an den sogenannten E-Mail-Client des bzw. der Empfänger gesendet. Der E-Mail-Client des Empfängers 2 generiert in einen dritten Prozeßschritt 24 daraufhin über die Anwort-Funktion eine E-Mail-Antwort als bestätigungsmeldung 10. Die Bestätigungsmeldung 10 entspricht dabei von der Struktur her beispielsweise der in Figur 2b gezeigten Struktur. In einem weiteren Prozeßschritt 25 wird die Bestätigungsmeldung 10 von der Steuerungsvorrichtung 1 empfangen, ausgewertet und mit Hilfe der enthaltenen Kennungen 19a,19b eine Zuordnung der Bestätigungsmeldung 10 zur erfolgten Meldung 3 vorgenommen.

Zusammenfassend betrifft die Erfindung somit ein System, ein Verfahren und eine Steuerungsvorrichtung zur Erzeugung einer Meldung insbesondere einer Alarmmeldung einer Steuerungsvorrichtung 1 eines Automatisierungssystems 4. Zur vereinfachten Nutzung vorhandener Übertragungsmittel wird vorgeschlagen, die Meldung 3 einer Steuerungsvorrichtung 1 als E-Mail über Intranet und/oder Internet 20 an eine vorgebbare Empfangsvorrichtung 2 zu übermitteln. Bei einer vorteilhaften Ausgestaltungsform trägt die Steuerungsvorrichtung 1 in ein Kennungsfeld 12 der Meldung 3 eine der jeweiligen Meldung 3 individuell zugeordnete Meldungskennung 19a ein. Von der Empfangsvorrichtung 2 wird nach Empfang einer Meldung 3 an die Steuerungsvorrichtung 1 eine Bestätigungsmeldung 10 zurückgesendet, die die als Bestätigungskennung 19b die der zugrunde liegenden Meldung 3 zugehörige Kennung 19a enthält. Durch einen Vergleich der in der Bestätigungsmeldung 10 enthaltene Bestätigungskennung 19b mit der in der gesendeten Meldung 3 enthaltenen Meldekennung 19a kann die Bestätigungsmeldung 10 der gesendeten Meldung eindeutig zugeordnet werden.

## Patentansprüche

1. System zur Erzeugung einer Meldung (3) einer Steuerungsvorrichtung (1) über ein Datenübertragungssystem (9) an eine mit dem Datensystem (9) koppelbare Empfangsvorrichtung (2), wobei als Meldung (3) eine E-Mail und als Datenübertragungssystem (9) ein Intranet und/oder ein Internet (20) vorgesehen sind und wobei die Steuerungsvorrichtung (1) Mittel (8) zur Erzeugung der Meldung (3) an die über eine vorgebbare Adresse (13) adressierbare Empfangsvorrichtung (2) aufweist, wobei die Meldung (3) ein Adressfeld (15) zur Kennzeichnung eines Empfängers der jeweiligen Meldung (3) aufweist, und wobei die Empfangsvorrichtung (2) Mittel zum Empfang der von der Steuerungsvorrichtung (1) gesendeten Meldung (3) aufweist,
**dadurch gekennzeichnet,**
• **daß** die Steuerungsvorrichtung (1) eine speicherprogrammierbare Steuerung, numerische Steuerung und/oder Robotersteuerung eines Automatisierungssystems (4) ist,
• **daß** die Meldung (3) eine Alarm- oder Fehlermeldung des Automatisierungssystems ist,
• **daß** die Steuerungsvorrichtung (1) Mittel zum Empfang einer von der Empfangsvorrichtung (2) an die Steuerungsvorrichtung (1) zurückgesendeten Bestätigungsmeldung (10), die als Bestätigungskennung (19b) die der zugrunde liegenden Meldung (3) zugehörige Kennung (19a) enthält, und Mittel zum Vergleich der in der Bestätigungsmeldung (10) enthaltenen Kennung (19b) mit einer in der gesendeten Meldung (3) enthaltenen Kennung (19a) aufweist und
• **daß** die Steuerungsvorrichtung (1) Mittel zur automatischen Markierung einer Meldung (3) als quittiert aufweist, wenn von der Steuerungsvorrichtung (1) eine Bestätigungsmeldung (10) mit der der zugehörigen Meldung (3) zugeordneten Meldungskennung (19b) empfangen wurde, wobei für eine Verwaltung der Meldungen der Status der Meldung (3) automatisch auf "quittiert" geändert wird.

2. System nach Anspruch 1,
**dadurch gekennzeichnet,**
**daß** die Meldung (3) ein Kennungsfeld (12) für eine der jeweiligen Meldung (3) individuell zugeordnete Meldungskennung (19a) aufweist.

3. Steuerungsvorrichtung (1) mit einer Sendevorrichtung (8) zur Erzeugung und zum Senden einer Meldung über ein Datenübertragungssystem (9) an eine mit dem Datenübertragungssystem (9) koppelbare Empfangsvorrichtung (2), wobei die Sendevorrichtung (8) Mittel zur Erzeugung der Meldung (3) als E-Mail an das als Intranet und/oder Internet (20) ausgebildete Datenübertragungssystem (9) aufweist, wobei die Meldung (3) ein Adressfeld (15) zur Kennzeichnung eines Empfängers der jeweiligen Meldung (3) aufweist,
**dadurch gekennzeichnet,**
• **daß** die Steuerungsvorrichtung (1) eine speicherprogrammierbare Steuerung, numerische Steuerung und/oder Robotersteuerung eines Automatisierungssystems (4) ist,
• **daß** die Meldung (3) eine Alarm- oder Fehlermeldung des Automatisierungssystems ist,
• **daß** die Steuerungsvorrichtung (1) Mittel zum Empfang einer von der Empfangsvorrichtung (2) an die Steuerungsvorrichtung (1) zurückgesendeten Bestätigungsmeldung (10), die als Bestätigungskennung (19b) die der zugrunde liegenden Meldung (3) zugehörige Kennung (19a) enthält, und Mittel zum Vergleich der in der Bestätigungsmeldung (10) enthaltenen Kennung (19b) mit der in der gesendeten Meldung (3) enthaltenen Kennung (19a) aufweist und
• **daß** die Steuerungsvorrichtung (1) Mittel zur automatischen Markierung einer Meldung (3) als quittiert aufweist, wenn von der Steuerungsvorrichtung (1) eine Bestätigungsmeldung (10) mit der der zugehörigen Meldung (3) zugeordneten Meldungskennung (19b) empfangen wurde, wobei für eine Verwaltung der Meldungen der Status der Meldung (3) automatisch auf "quittiert" geändert wird.

4. Steuerungsvorrichtung nach Anspruch 3,
**dadurch gekennzeichnet,**
**daß** die Meldung (3) ein Kennungsfeld (12) für eine der jeweiligen Meldung (3) individuell zugeordnete Meldungskennung (19a) aufweist.

5. Verfahren zur Erzeugung einer Meldung (3) einer Steuerungsvorrichtung (1) über ein Datensystem (9) an eine mit dem Datensystem (9) koppelbare Empfangsvorrichtung (2), bei dem die Meldung (3) als E-Mail über Intranet und/oder Internet (20) an eine vorgebbare Empfangsvorrichtung (2) übermittelt wird,
**dadurch gekennzeichnet,**
• **daß** das Verfahren zur Erzeugung einer Fehler- und/oder Alarmmeldung einer speicherprogrammierbaren Steuerung, einer numerischen Steuerung und/oder einer Robotersteuerung eines Automatisierungssystems (4) angewendet wird,
• **daß** von der Empfangsvorrichtung (2) nach Empfang einer Meldung (3) an die Steuerungsvorrichtung (1) eine Bestätigungsmeldung (10) zurückgesendet wird, die die als Bestätigungskennung (19b) die der zugrunde liegenden Meldung (3) zugehörige Kennung (19a) enthält,
• **daß** in der Steuerungsvorrichtung (1) die in der Bestätigungsmeldung (10) enthaltene Bestätigungskennung (19b) mit der in der gesendeten Meldung (3) enthaltenen Meldekennung (19a) verglichen wird,
• **daß** in der Steuerungsvorrichtung (1) eine Quittierung einer Meldung (3) erfolgt, wenn von der Steuerungsvorrichtung (1) eine Bestätigungsmeldung (10) mit der der zugehörigen Meldung (3) zugeordneten Meldungskennung (19b) empfangen wurde, und
• **daß** für eine Verwaltung der Status der Meldung (3) automatisch auf "quittiert" geändert wird.

6. Verfahren nach Anspruch 5,
**dadurch gekennzeichnet,**
**daß** die Steuerungsvorrichtung (1) in ein Kennungsfeld (12) der Meldung (3) eine der jeweiligen Meldung (3) individuell zugeordnete Meldungskennung (19a) einträgt.

## Claims

1. System for generating a message (3) of a control unit (1) via a data transmission system (9) to a receiving device (2) which can be linked to the data system (9), whereby the message (3) is an e-mail message and the data transmission system (9) is an intranet and/or the internet (20) and whereby the control unit (1) comprises means (8) for generating the message (3) to the receiving device (2) addressable with a predefined address (13), whereby the message (3) has an address field (15) to identify a recipient of the corresponding message (3), and whereby the receiving device (2) has means to receive the message (3) sent by the control unit (1), **characterised in that**
• the control unit (1) is a stored-program control unit, numerical control unit and/or robot control unit of an automation system (4),
• the message (3) is an alarm or fault message of the automation system,
• the control unit (1) has means (1) to receive an acknowledgement (10) returned by the receiving device (2) to the control unit (1), said acknowledgement containing the identification (19a) associated with the underlying message (3) as an acknowledgement identification (19b), and means to compare the identification (19b) contained in the acknowledgement message (10) with the identification (19a) contained in the transmitted message (3), and
• the control unit (1) has means for automatically marking a message (3) as acknowledged if an acknowledgement (10) with the message identification (19b) assigned to the associated message (3) has been received by the control unit (1), whereby the status of the message (3) is automatically changed to "acknowledged" to enable the messages to be managed.

2. System according to Claim 1, **characterised in that** the message (3) has a reference field (12) for a message identification (19a) individually assigned to the corresponding message (3).

3. Control unit (1) with a transmitting device (8) for generating and transmitting a message via a data transmission system (9) to a receiving device (2) capable of being linked to the data transmission system (9), whereby the transmitting device (8) has means to generate the message (3) as an e-mail to the data transmission system (9) embodied as an intranet and/or the internet (20), whereby the message (3) has an address field (15) to identify a recipient of the corresponding message (3), **characterised in that**
• the control unit (1) is a stored-program control unit, numerical control unit and/or robot control unit of an automation system (4),
• the message (3) is an alarm or fault message of the automation system,
• the control unit (1) has means to receive an acknowledgement (10) returned by the receiving device (2) to the control unit (1), said acknowledgement containing the identification (19a) associated with the underlying message (3) as an acknowledgement identification (19b), and means to compare the identification (19b) contained in the acknowledgement message (10) with the identification (19a) contained in the transmitted message (3), and
• the control unit (1) has means for automatically marking a message (3) as acknowledged if an acknowledgement (10) with the message identification (19b) assigned to the associated message (3) has been received by the control unit (1), whereby the status of the message (3) is automatically changed to "acknowledged" to enable the messages to be managed.

4. Control unit according to Claim 2, **characterised in that** the message (3) has a reference field (12) for a message identification (19a) individually assigned to the corresponding message (3).

5. Method for generating a message (3) of a control device (1) via a data system (9) to a receiving device (2) capable of being linked to the data system (9), in which the message (3) is transmitted as an e-mail via an intranet and/or the internet (20) to a predefined receiving device (2), **characterised in that**
• the method of generating a fault and/or alarm message of a stored-program control unit, a numerical control unit and/or a robot control unit of an automation system (4) is used,
• an acknowledgement (10) is returned by the receiving device (2) to the control unit (1) following receipt of a message (3), said acknowledgement containing the identification (19a) associated with the underlying message (3) as an acknowledgement identification (19b),
• the acknowledgement identification (19b) contained in the acknowledgement (10) is compared in the control unit (1) with the message identification (19a) contained in the transmitted message (3),
• a message (3) is acknowledged in the control unit (1) if an acknowledgement (10) with the message identification (19b) assigned to the associated message (3) has been received by the control unit (1), and
• the status of the message (3) is automatically changed to "acknowledged" to enable the messages to be managed.

6. Method according to Claim 5, **characterised in that** the control unit (1) enters a message identification (19a) assigned individually to the corresponding message (3) in a reference field (12) of the message (3).

## Revendications

1. Système pour la production d'un message (3) d'un dispositif de commande (1) par l'intermédiaire d'un système de transmission de données (9) vers un dispositif de réception (2) pouvant être connecté au système de données (9), dans lequel il est prévu comme message (3) un courrier électronique et comme système de transmission de données (9) un Intranet et/ou un Internet (20), dans lequel le dispositif de commande (1) comporte des moyens (8) pour la production du message (3) vers le dispositif de réception (2) adressable par l'intermédiaire d'une adresse (13) pouvant être prescrite, dans lequel le message (3) comporte un champ d'adresse (15) pour caractériser un récepteur du message (3) respectif et dans lequel le dispositif de réception (2) comporte des moyens pour la réception du message (3) envoyé par le dispositif de commande (1),
**caractérisé par le fait que**
• le dispositif de commande (1) est une commande programmable en mémoire, une commande numérique et/ou une commande de robot d'un système d'automatisation (4),
• le message (3) est un message d'alarme ou d'erreur du système d'automatisation,
• le dispositif de commande (1) comporte des moyens pour recevoir un message d'accusé de réception (10) qui est renvoyé par le dispositif de réception (2) au dispositif de commande (1) et qui contient comme identificateur d'accusé de réception (19b) l'identificateur (19a) associé au message de base (3) et des moyens pour comparer l'identificateur (19b) contenu dans le message d'accusé de réception (10) à un identificateur (19a) contenu dans le message émis (3) et
• le dispositif de commande (1) comporte des moyens pour marquer automatiquement un message (3) comme étant acquitté lorsque le dispositif de commande (1) a reçu un message d'accusé de réception (10) ayant l'identificateur de message (19b) attribué au message associé (3), le statut du message (3) étant automatiquement changé en "acquitté" en vue de la gestion des messages.

2. Système selon la revendication 1,
**caractérisé par le fait que** le message (3) comporte un champ d'identification (12) pour un identificateur de message (19a) associé individuellement au message (3) respectif.

3. Dispositif de commande (1) comportant un dispositif d'émission (8) pour la production et pour l'émission d'un message par l'intermédiaire d'un système de transmission de données (9) vers un dispositif de réception (2) pouvant être connecté au système de transmission de données (9), dans lequel le dispositif d'émission (8) comporte des moyens pour la production du message (3) sous forme de courrier électronique sur le système de transmission de données (9) conçu comme un Intranet et/ou Internet (20) et dans lequel le message (3) comporte un champ d'adresse (15) pour caractériser un récepteur du message (3) respectif,
**caractérisé par le fait que**
• le dispositif de commande (1) est une commande programmable en mémoire, une commande numérique et/ou une commande de robot d'un système d'automatisation (4),
• le message (3) est un message d'alarme ou d'erreur du système d'automatisation,
• le dispositif de commande (1) comporte des moyens pour recevoir un message d'accusé de réception (10) qui est renvoyé par le dispositif de réception (2) au dispositif de commande (1) et qui contient comme identificateur d'accusé de réception (19b) l'identificateur (19a) associé au message de base (3) et des moyens pour comparer l'identificateur (19b) contenu dans le message d'accusé de réception (10) à l'identificateur (19a) contenu dans le message émis (3) et
• le dispositif de commande (1) comporte des moyens pour marquer automatiquement un message (3) comme étant acquitté lorsque le dispositif de commande (1) a reçu un message d'accusé de réception (10) ayant l'identificateur de message (19b) attribué au message associé (3), le statut du message (3) étant automatiquement changé en "acquitté" en vue de la gestion des messages.

4. Dispositif de commande selon la revendication 3,
**caractérisé par le fait que** le message (3) comporte un champ d'identification (12) pour un identificateur de message (19a) associé individuellement au message (3) respectif.

5. Procédé pour la production d'un message (3) d'un dispositif de commande (1) par l'intermédiaire d'un système de données (9) vers un dispositif de réception (2) pouvant être connecté au système de données (9), dans lequel le message (3) est transmis sous forme de courrier électronique par l'intermédiaire d'Intranet et/ou Internet (20) à un dispositif de réception (2) pouvant être prescrit,
**caractérisé par le fait que**
• on applique le procédé pour la production d'un message d'erreur et/ou d'alarme à une commande programmable en mémoire, à une commande numérique et/ou à une commande de robot d'un système d'automatisation (4),
• le dispositif de réception (2) après réception d'un message (3) renvoie au dispositif de commande (1) un message d'accusé de réception (10) qui contient comme identificateur d'accusé de réception (19b) l'identificateur (19a) associé au message de base (3),
• dans le dispositif de commande (1), on compare l'identificateur (19b) contenu dans le message d'accusé de réception (10) à l'identificateur (19a) contenu dans le message émis (3),
• dans le dispositif de commande (1), on effectue l'acquittement d'un message (3) lorsque le dispositif de commande (1) a reçu un message d'accusé de réception (10) ayant l'identificateur de message (19b) attribué au message associé (3), et
• on change automatiquement en "acquitté" le statut du message (3) en vue de la gestion des messages.

6. Procédé selon la revendication 5,
**caractérisé par le fait que** le dispositif de commande (1) enregistre dans un champ d'identification (12) du message (3) un identificateur de message (19a) associé individuellement au message (3) respectif.
